# EUROPÄISCHE PATENTSCHRIFT

(11) **EP 0 697 560 B1**
(45) Veröffentlichungstag und Bekanntmachung des Hinweises auf die Patenterteilung: **27.12.1996**
(21) Anmeldenummer: 94112845.6
(22) Anmeldetag: 17.08.1994
(51) Int. Cl.: F21S 1/02

(54) **Langgestreckte Innenleuchte für arbeitsplatzorientierte Beleuchtung**
Elongated indoor light fixture for lighting a work station
Lampe d'intérieur allongée pour d'éclairage d'un poste de travail

(43) Veröffentlichungstag der Anmeldung: 21.02.1996
(73) Patentinhaber: SIEMENS AKTIENGESELLSCHAFT, 80333 München (DE)
(72) Erfinder: Leibig, Joachim, D-83374 Oderberg (DE)

(56) Entgegenhaltungen:
- GB-A- 534 455
- GB-A- 648 271
- GB-A- 2 032 606
- US-A- 4 912 605

## Beschreibung

Die Erfindung bezieht sich auf eine langgestreckte Innenleuchte, die sich insbesondere für eine arbeitsplatzorientierte Beleuchtung eignet.

Langgestreckte Innenleuchten für eine arbeitsplatzorientierte Beleuchtung sind in einer Vielzahl von Ausführungsformen z. B. aus EP-B1-0 045 901 oder EP-A1-0 413 088 bekannt. Bei den bekannten Lösungen werden stabförmige Leuchtstofflampen oder auch Kompaktleuchtstofflampen als Lichtquellen eingesetzt. Vorzugsweise sind modernere Ausführungsformen bekannter Arbeitsplatzleuchten als Spiegelrasterleuchten ausgebildet, um den verschiedenen Anforderungen an die Beleuchtungsqualität an einem modernen Arbeitsplatz gerecht zu werden, d. h. das Licht von der Leuchte auf den Arbeitsplatz so zu lenken, daß bei ausreichender und möglichst gleichmäßiger Leuchtdichte auf der Nutzebene, der Arbeitsplatzfläche Direktblendungen durch die Leuchte vermieden werden. In anderen Fällen werden voluminöse Anordnungen zur Lichtlenkung eingesetzt, um diesen Forderungen zu genügen. Die üblicherweise verwendeten Lichtquellen einerseits sowie die notwendigen Maßnahmen zur Lichtlenkung andererseits bedingen ein relativ großes Bauvolumen derartiger Leuchten. Da sie aus lichttechnischen Gründen häufig in einem verhältnismäßig geringen relativen Abstand zu der Nutzebene, bezogen auf die Raumhöhe, angeordnet werden, wirken sie im Büroraum als sehr kompakte und ins Auge fallende Beleuchtungselemente. Hinzukommt, daß sich die Nutzung von Büroräumen relativ häufig ändern kann und dann unter Umständen eine derartige arbeitsplatzorientierte Beleuchtung mit konventionellen Arbeitsplatzleuchten der geänderten Nutzung des Raumes angepaßt werden muß, falls man auf zweckmäßige, auf die jeweiligen Bedürfnisse zugeschnittene Innenraumbeleuchtung Wert legt, was häufig genug aus Aufwandsgründen nicht der Fall ist.

Im vorliegenden Zusammenhang ist auch eine aus US-A-4,912,605 bekannte Lichtbandanordnung, die aus einer Mehrzahl von aneinandergehängten Lichtleiterabschnitten besteht, von Interesse. Dabei ist zwischen je zwei benachbarten Lichtleiterabschnitten eine Lichtkoppeleinheit mit spiegelsymmetrisch zueinander ausgerichteten Reflektoren angeordnet. Damit wird von einer Lichtquelle abgestrahltes Licht etwa gleichmäßig verteilt in die benachbarten Lichtleiterabschnitte eingekoppelt. Dadurch wird erreicht, bei einem langgestreckten Lichtband im Falle des Ausfalles einer Lichtquelle die dadurch entstehende optische Unterbrechung des Lichtbandes durch einen von beiden Seiten in Richtung auf die Fehlstelle eingekoppelten Teillichtstrom zu mildern.

Der Erfindung liegt die Aufgabe zugrunde, eine weitere Möglichkeit für eine langgestreckte Innenleuchte, die sich insbesondere für eine arbeitsplatzorientierte Beleuchtung eignet, zu schaffen, die den Anforderungen an eine qualitativ zufriedenstellende Beleuchtung eines Arbeitsplatzes auch im Hinblick auf weitgehende Minderung einer Direkt- oder Reflexblendung genügt, sich dennoch in einer Vielzahl von Anwendungsfällen vorteilhaft einsetzen läßt und dabei von einer schlanken Bauform ist, die sich in die Büroumgebung einfügt.

Diese Aufgabe wird erfindungsgemäß durch die im Patentanspruch 1 beschriebenen Merkmale gelöst.

Das in dieser Lösung verwirklichte Prinzip der Lichtlenkung des von einer leistungsstarken Lichtquelle kleiner Bauform ausgestrahlten Lichtes läßt sich in einer Vielzahl von Bauformen verwirklichen, die dem Leuchtengestalter große Freizügigkeit erlaubt. Die Leuchtenquerschnitte können, soweit es dieses Prinzip der Lichtlenkung betrifft, nahezu beliebig gewählt werden, wobei dem Gestalter eine Vielzahl von Lösungsmöglichkeiten zur Verfügung steht, auch die für den Betrieb der Leuchte notwendigen elektrischen Bauteile und Verdrahtungen im Leuchtengehäuse günstig unterzubringen. Durch das Einkoppeln des von der Lichtquelle ausgestrahlten Lichtes in einen sich zu beiden Seiten dieser Lichtquelle in Leuchtenlängsachse erstreckende Lichtkanal wird erreicht, daß das im Lichtkanal an hochreflektierend ausgeführten Wänden reflektierte und gebündelte Licht vorzugsweise an den Stirnseiten der Leuchte austritt. Die diesen Stirnseiten zugeordneten Reflektorflächen bilden Umlenkspiegel für das austretende Licht, das so gerichtet auf die Nutzebene gelenkt wird. Durch entsprechende Formgebung dieser als Umlenkspiegel genutzten Reflektorflächen hat man es weitgehend in der Hand, vorgegebene Beleuchtungsverhältnisse in der Nutzebene zu schaffen.

Wie in Unteransprüchen beschriebene Weiterbildungen der Erfindung zeigen, läßt diese Lösung eine Vielzahl von Ausgestaltungen zu. So kann eine erfindungsgemäße Leuchte auch als Direkt/Indirekt-Leuchte ausgeführt sein, indem man neben den Öffnungen des Lichtkanales an den Stirnseiten der Leuchte im Bereich der mittig angeordneten Lichtquelle in der Oberseite des Leuchtengehäuses durch verschiebbare Blendelemente eine variable Öffnung schafft, durch die ein Teillichtstrom nach oben mit einstellbarem Freiausstrahlungswinkel abgegeben wird. Im montierten Zustand der Leuchte erreicht man dadurch zusätzlich zu der direkten Beleuchtung des Arbeitsplatzes über die an den Stirnseiten der Leuchte angeordneten Reflektorflächen weiterhin eine Deckenaufhellung, die durch ihre diffuse Wirkung ein angenehmes Raumklima schafft. Wenn man nun, wie in Weiterbildungen der Erfindung zusätzlich vorgesehen, die genannten, den Stirnseiten der Leuchte zugeordneten Reflektorflächen relativ zu dem Leuchtengehäuse beweglich anordnet, so gibt man dem Benutzer des Arbeitsplatzes eine Mehrzahl von Möglichkeiten an die Hand, die Beleuchtung seines Arbeitsplatzes seinen individuellen Vorstellungen und Wünschen entsprechend auszugestalten. So können z. B. Links- bzw. Rechtshänder die den Direktanteil der Arbeitsplatzbeleuchtung bildenden, sich vorzugsweise über der Nutzebene kreuzenden Teillichtströme entsprechend einzustellen, um irritierende Schatten auf der Arbeitsfläche durch den vorzugsweise benutzten Arm zu vermeiden.

Weitere Vorteile der Erfindung ergeben sich aus der nachfolgenden Beschreibung von Ausführungsbeispielen, die anhand der Zeichnung erfolgt. Dabei zeigt:

Figur 1 in einer Prinzipdarstellung eine Ausführungsform einer erfindungsgemäßen Innenleuchte für eine arbeitsplatzorientierte Beleuchtung mit einer mittig und quer zur Leuchtenlängsachse angeordneten Lichtquelle geringer Einbaulänge,

Figur 2 in einem Detailausschnitt die Ausgestaltung des Leuchtenzentrums in der Umgebung der Lichtquelle mit einer Mehrzahl von Reflektorflächen zum Einkoppeln des von der Lichtquelle ausgestrahlten Lichtes in einen sich zu beiden Seiten der Lichtquelle erstreckenden Lichtkanal,

Figur 3 und Figur 4 Beispiele für Blendelemente, die, in die Oberseite der Leuchte längsverschieblich im Bereich der Lichtquelle eingefügt, einander paarweise gegenüberstehend, eine Lichtaustrittsöffnung der Leuchte nach oben bilden,

Figur 5 in einer Ausführungsform mögliche Ausgestaltungen von stirnseitigen Lichtaustrittsöffnungen der Leuchte mit einem beweglich angeordneten Reflektorelement, das als Umlenkspiegel einen der in die Leuchte in Längsrichtung eingekoppelten Teillichtstrom auf die Nutzebene richtet,

Figur 6 eine weitere Ausführungsform für eine dieser den Stirnseiten der Leuchte zugeordneten Reflektorflächen,

Figur 7 in einem durch die Lichtquelle gelegten Querschnitt ein Beispiel für eine weitere mögliche Ausführungsform des Leuchtengehäuses sowie des Lichtkanals und

Figur 8 bis 10 in schematischen Darstellungen die Verwendung einer derartigen Leuchte bei einer arbeitsplatzorientierten Beleuchtung.

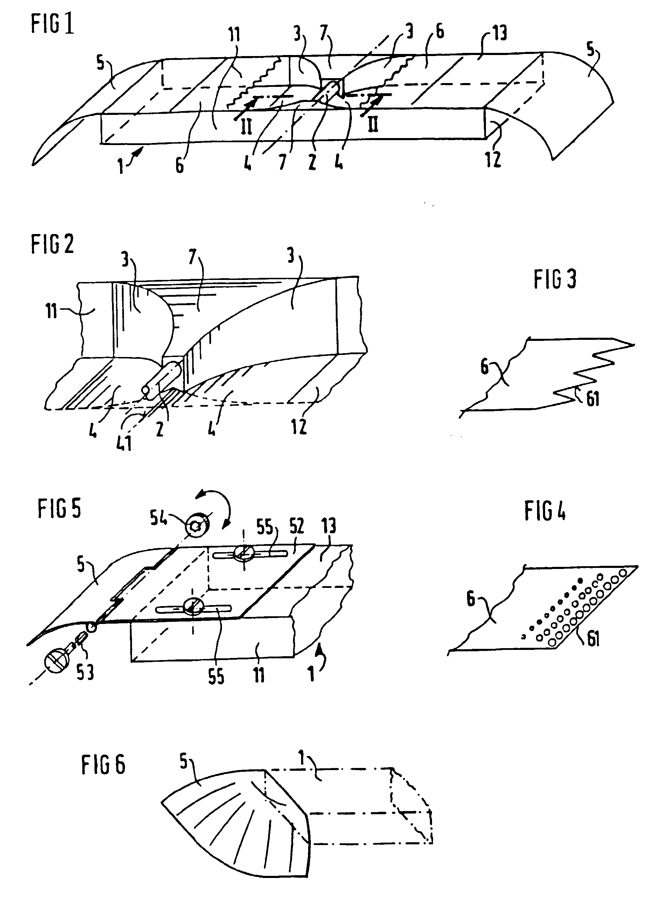

Ein mögliches Ausführungsbeispiel einer erfindungsgemäßen langgestreckten Leuchte ist in Figur 1 schematisch dargestellt. In diesem Ausführungsbeispiel besitzt die langgestreckte Leuchte ein kastenförmiges Leuchtengehäuse 1, in dem mittig sowie senkrecht und quer zu der Leuchtenlängsachse eine leistungsstarke Lichtquelle 2 angeordnet ist, die beispielsweise als HQI-TS-Lampe ausgebildet sein kann. Dieser Lampentyp ist zwar keine ideal punktförmige Lichtquelle, kann jedoch wegen seines kurzen Brennfleckes noch als angenähert punktförmig angesehen werden. Etwas genauer betrachtet, weisen derartige Lichtquellen senkrecht zur Lampenachse eine rotationssymmetrische, in einer die Lampenachse enthaltenen Ebene eine schmetterlingsartige Lichtverteilung auf, wobei die Einschnürungen dieser Lichtverteilungskurve in der Lampenlängsachse liegen. Diese Charakteristik der Lichtverteilung lassen diesen Lampentyp für die vorliegende Leuchtengestaltung besonders geeignet erscheinen.

Das von der Lichtquelle 2 ausgestrahlte Licht soll sich zunächst zu beiden Seiten der Lichtquelle in dem durch den Hohlraum des Leuchtengehäuses 1 gebildeten Lichtkanal, gegebenenfalls durch Reflexion an den Wänden des Leuchtengehäuses 1 ausbreiten. Um diese bevorzugt in beiden Richtungen der Leuchtenlängsachse erwünschte Ausbreitung des von der Lichtquelle 2 abgestrahlten Lichtes zu optimieren, sind der Lichtquelle 2 benachbart zu deren beiden Seiten und Seitenwänden 11 des Leuchtengehäuses 1 zugewandt, erste Reflektoren 3 vorgesehen, die zu einer durch die Leuchtenlängsachse sowie die Längsachse der Lichtquelle 2 aufgespannten Ebene senkrecht stehen und in dieser Ebene ein kegelschnittförmiges Querschnittsprofil aufweisen. Dieses Profil ist vorzugsweise parabelförmig, wobei der Brennfleck der Lichtquelle 2 im Brennpunkt dieser Parabel angeordnet ist. Der Vorteil dieser Ausgestaltung ist die Ausrichtung des abgestrahlten Lichtes parallel zur Längsachse der Leuchte. Denkbar wären jedoch auch andere Profile der ersten Reflektoren 3.

Figur 2 verdeutlicht diesen Sachverhalt in einem Detailausschnitt, der längs einer Schnittlinie II-II von Figur 1 geführt ist. In dem dargestellten Beispiel sind diese ersten Reflektoren 3 einerseits bezüglich der Längsachse der Lichtquelle und andererseits bezüglich der Leuchtenlängsachse spiegelbildlich symmetrisch angeordnet. Dies ist eine konstruktiv und fertigungstechnisch besonders einfache, dabei zufriedenstellende Lösung, die das von der Lichtquelle 2 ausgestrahlte Licht, in den durch das Leuchtengehäuse 1 gebildeten Lichtkanal einkoppelnd, in Richtung der Leuchtenlängsachse bündelt. Eine lichttechnisch noch vorteilhaftere Lösung wäre es, diese ersten Reflektoren 3 als sphärische Spiegelflächen auszubilden, allerdings wird dieser lichttechnische Vorteil mit einem etwas höheren Herstellungsaufwand erkauft.

In Figur 2 ist weiter dargestellt, daß der Bodenfläche 12 des Leuchtengehäuses 1 zugeordnet, zweite Reflektoren 4 vorgesehen sind, die ebenfalls plane, sich in Richtung der Leuchtenlängsachse erstreckende Kegelschnittflächen besitzen, die sich in einer zur Längsachse der Lichtquelle 2 parallelen Kante 41 unterhalb der Lichtquelle 2 schneiden. Diese zweiten Reflektoren 4 bilden somit ein sich unterhalb der Lichtquelle 2 in Richtung der Leuchtenlängsachse erstreckendes dachartiges Gebilde, mit dem vermieden wird, daß von der Lichtquelle 2 in Richtung der Bodenfläche 12 des Leuchtengehäuses ausgestrahltes Licht von dort in die Lichtquelle 2 selbst zurückreflektiert wird. Die zweiten Reflektoren 4 unterstützen somit den durch die ersten Reflektoren 3 erzielten Einkopplungseffekt des ausgestrahlten Lichtes in den durch die beiden Hälften des Leuchtengehäuses 1 gebildeten Lichtkanal und tragen zur Verbesserung des Leuchtenwirkungsgrades bei.

Die so durch Lichtlenkung im Lichtkanal geführten und in beiden Richtungen der Leuchtenlängsachse sich ausbreitenden, gebündelten Teillichtströme treten durch die offenen Stirnseiten des Leuchtengehäuses 1 aus. Sie treffen dort auf dritte Reflektoren 5, ebenfalls kegelschnittförmigen Querschnitts, die diese Teillichtströme nach unten und gegenseitig vorzugsweise über Kreuz auf eine in Figur 1 nicht dargestellte Nutzebene werfen.

Soweit im Prinzip vorstehend beschrieben, ist die erläuterte Leuchtenform als eine Direktleuchte anzusehen. Im Sinne einer variablen Ausgestaltung der Leuchte zur Anpassung an unterschiedliche Beleuchtungsaufgaben in Innenräumen, ist es aber vorteilhaft, die Deckfläche 13 des Leuchtengehäuses 1 im Bereich der Leuchtenmitte über der Lichtquelle 2 zu öffnen, so daß durch diese Öffnung auch ein definierter Teillichtstrom nach oben austreten kann, um bei montierter Leuchte durch Deckenaufhellung zur indirekten Raumbeleuchtung beizutragen. Zu diesem Zweck sind einerseits in einen entsprechenden Ausschnitt der Deckfläche 13 eingesetzte und gegenüber dieser Deckfläche in Leuchtenlängsrichtung verschiebbar angeordnete Blendelemente 6 vorgesehen. Andererseits wird die Ausstrahlung dieses indirekt wirkenden Teillichtstromes nach oben unterstützt durch vierte Reflektoren 7, die, zwischen den ersten Reflektoren 3 liegend und sich in Richtung der Längsachse der Lichtquelle 2 erstreckend, den Raum zwischen den Oberkanten der einander benachbarten Paare der Reflektoren 3 und der jeweils zugeordneten Seitenwand 11 des Leuchtengehäuses 1 abdecken. Diese vierten Reflektoren 7 können als ebene Flächen, gegebenenfalls aber auch als Kegelschnittflächen ausgebildet sein. Die letztgenannte Möglichkeit ist hier aber von geringerer lichttechnischer Bedeutung, da die vierten Reflektoren 7 im wesentlichen in achsennahen Bereichen der Lichtquelle 2 liegen, in denen diese im obengenannten Fall der Lichtausstrahlung, relativ betrachtet, jedoch nur einen geringen Lichtstromanteil ausstrahlt.

Wesentlich bedeutsamer für die Aufteilung des von der Leuchte abgestrahlten Lichtes in einen direkten bzw. einen indirekten Anteil ist dagegen die in Richtung der Leuchtenlängsachse verschiebbare Anordnung der Blendelemente 6, weil dadurch, wie unmittelbar einzusehen ist, ein Freiausstrahlungswinkel α der Leuchte nach oben variierbar ist. Nicht unwesentlich ist dabei auch die Ausgestaltung der lichtquellennahen Randkante 61 der Blendelemente 6. Je näher nämlich diese Randkante 61 - bei kleinem Freiausstrahlungswinkel α - der Lichtquelle 2 einerseits liegt und andererseits je geringer der Leuchtenabstand zu einer Raumdecke ist, um so schärfer bilden sich diese Randkanten 61 der beiden Blendelemente 6 als Schatten an der Raumdecke ab.

Wie Figur 3 bzw. 4 zeigen, gibt es verschiedene Möglichkeiten, diesen unerwünschten Effekt zu mildern bzw. zu eliminieren. In Figur 1 ist schematisch die Möglichkeit dargestellt, die lichtquellennahe Randkante 61 der Blendelemente 6 nicht als gerade, sondern als eine gebrochene Linie, auszubilden. Figur 3 zeigt beispielhaft und lediglich schematisch eine sägezahnförmige Ausgestaltung, wobei durchaus auch andere Formen dieser Kantengestaltung denkbar sind. Figur 4 zeigt eine andere Möglichkeit, bei dem man den lichtquellennahen Randbereich eines Blendelementes 6 nach Art eine Lochscheibe ausbildet, so daß im Bereich der Abbildung der Randkante 61 an der Raumdecke auch auf diese Weise hohe Leuchtdichteunterschiede vermieden werden. Zu ergänzen ist, daß die Lichtöffnung der Leuchte nach oben selbstverständlich durch eine staubschützende, das indirekte Licht gegebenenfalls auch streuende Abdeckscheibe zusätzlich abgedeckt sein kann, was in Figur 1 aus Gründen der Übersichtlichkeit nicht dargestellt ist.

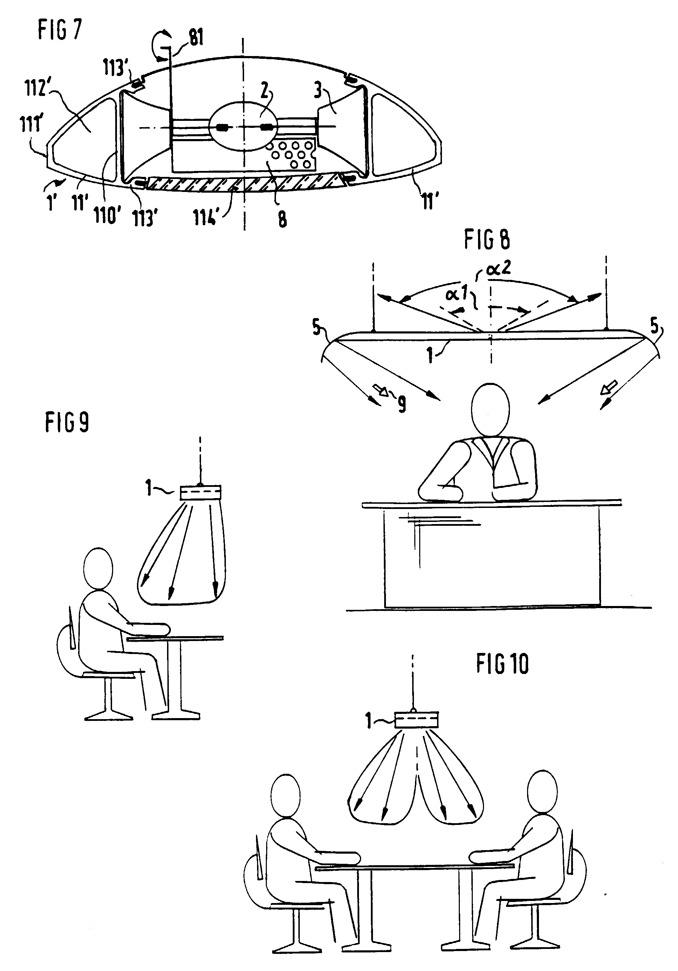

Nach der vorstehenden Beschreibung sind auch die dritten Reflektoren 5 von wesentlicher Bedeutung für die lichttechnische Funktion der Leuchte. Um eine weitere Variationsmöglichkeit zu schaffen, ist es deshalb vorteilhaft, diese dritten Reflektoren 5 in bezug auf die offenen Stirnflächen des Leuchtengehäuses 1 nicht fest anzuordnen. Figur 5 verdeutlicht dies schematisch in einer Teildarstellung eines der beiden Leuchtenenden. Hier sind die eigentlichen Spiegelflächen 51 der dritten Reflektoren 5 nach Art eines Klavierbandes an einer Lagerplatte 52 drehbeweglich festgelegt. Die einander zugeordneten, eingerollten Randseiten der Spiegelfläche 51 bzw. der Lagerplatte 52 sind in einer eingeschobenen Lagerachse 53 geführt, die an einem Ende einen Schraubenkopf, am anderen Ende einen Gewindezapfen aufweist. Auf diesen Gewindezapfen ist eine Mutter 54, beispielsweise eine Rändelmutter, aufschraubbar, um kraftschlüssig die Spiegelfläche 51 in einer gewünschten Position gegenüber der Lagerplatte 52 festzulegen.

Dies ist allerdings nur ein Beispiel, dem Fachmann steht für die drehbewegliche Anordnung der dritten Reflektoren in bezug auf das Leuchtengehäuse eine Mehrzahl von alternativen Gestaltungsmöglichkeiten zur Verfügung. So könnte statt dem in Figur 5 dargestellten Beispiel an der Deckfläche 13 des Leuchtengehäuses 1 auch ein senkrecht von dieser Deckfläche abstehender Befestigungswinkel mit einer Führungsbohrung vorgesehen sein, dem ein entsprechender Befestigungswinkel auf der Spiegelfläche 51 zugeordnet ist und einen Führungsschlitz in Form eines Kreisausschnittes aufweist. Wird durch den Führungsschlitz und die Führungsbohrung eine Befestigungsschraube gelegt, so könnte eine entsprechend gestaltete Anlagekante der Spiegelfläche 51 um die Stirnkante der Deckfläche 13 des Leuchtengehäuses 1 kippbar festgelegt werden.

Unabhängig von der individuellen konstruktiven Lösung ist für die lichttechnische Funktion wesentlich, daß die eigentliche Spiegelflächen 51 der dritten Reflektoren 5 senkrecht und quer zur Leuchtenlängsachse schwenkbar an der Leuchte angeordnet sind. Denn auf diese Weise ist es möglich, den jeweils durch die offenen Stirnseiten des Leuchtengehäuses 1 austretenden Teillichtstrom unter einem mehr oder minder steilen Winkel auf die unterhalb der Leuchte liegende Nutzebene zu richten und damit je nach Anwendungsfall die örtliche Beleuchtungsstärke auf der Nutzebene zu variieren.

Figur 5 zeigt in Ergänzung dazu eine weitere Möglichkeit. In diesem Beispiel ist nämlich die Lagerplatte 52 in Richtung der Leuchtenlängsachse längsverschieblich an dem Leuchtengehäuse 1 festgelegt. Schematisch ist die konstruktive Lösung dafür in Figur 5 durch ein Paar von parallel zur Leuchtenlängsachse verlaufenden Führungsschlitzen 55 realisiert, in die Befestigungsschrauben 56 eingesteckt sind, die ihrerseits - im einzelnen nicht dargestellt - in der Deckfläche 13 des Leuchtengehäuses 1 festgelegt sind. Auch diese längsbewegliche Führung der dritten Reflektoren 5 ist in ihrer konstruktiven Ausgestaltung lediglich beispielhaft zu verstehen. Wesentlich ist vielmehr, daß aufgrund einer solchen längsverschieblichen Anordnung der dritten Reflektoren 5 an dem Leuchtengehäuse 1 der Abstand der Spiegelflächen 51 dieser dritten Reflektoren 5 zu den offenen Stirnseiten des Leuchtengehäuses 1 variabel ist und auch auf diese Weise die lokale Beleuchtungsstärke bzw. die Lichtverteilung in der Nutzebene individuell gestaltbar ist.

In Figur 6 ist schematisch eine weitere Ausführungsform für die Spiegelflächen 51 der dritten Reflektoren 5 dargestellt. Im Gegensatz zu der in Figur 1 oder Figur 5 gezeigten Flügelform ist die Spiegelfläche 51 der dritten Reflektorfläche 5 hier hutförmig gestaltet. Diese in bezug auf die Leuchtenlängsachse unsymmetrische Ausgestaltung der Spiegelfläche 51 ermöglicht z. B. eine in manchen Anwendungsfällen erwünschte Unsymmetrie der Lichtverteilungskurve in der C0-C180°-Ebene, d. h. in einer Ebene quer zur Leuchtenlängsachse. Auch dieses Beispiel belegt, daß eine Vielzahl von Gestaltungsformen für diese dritten Reflektorflächen 5 denkbar ist, die es dem Fachmann gestattet, entsprechende Lichtverteilungen für die Leuchte auszubilden.

Die vorstehend beschriebenen Ausführungsbeispiele bezogen sich insbesondere auf eine langgestreckte Leuchte mit einem kastenförmigen Leuchtengehäuse. In Figur 7 ist in einem Querschnitt senkrecht zur Leuchtenlängsachse ein weiteres Ausführungsbeispiel mit einem davon abweichenden Leuchtenprofil sowie einer anderen konstruktiven Ausgestaltung des Leuchtengehäuses 1' gezeigt. In diesem Beispiel bestehen die tragenden Elemente des Leuchtengehäuses 1' aus zwei voneinander in vorgegebenem Abstand angeordneten Rahmenprofilen 11', die bezüglich der Leuchtenlängsebene spiegelsymmetrisch zueinander stehen. Der Querschnitt dieser Rahmenprofile 11' ist ein im wesentlichen sphärisches Dreieck, wodurch eine flache, die Längserstreckung der Leuchte betonende, etwa linsenförmige Querschnittsform der Leuchte zu erzielen ist. In Längserstreckung der Leuchte bilden senkrechte, d. h. parallel zur Leuchtenlängsebene verlaufende Innenwände 110' mit ihren einander zugewandten Oberflächen die Seitenwände für den Lichtkanal der Leuchte. Diese Innenwände umschließen gemeinsam mit Außenecken 111' der Rahmenprofile 11' einen geschlossenen Längskanal 112', der zum Unterbringen von Versorgungsleitungen und elektrischen Zubehörteilen der Leuchte genutzt werden kann.

Analog zu der Darstellung von Figur 2 sind, einander zugekehrt, in der Leuchtenmitte die ersten Reflektoren 3, sich an den Innenwänden 110' der Rahmenprofile 11' abstützend, angeordnet. Dazwischen ist senkrecht und quer zur Leuchtenlängsachse die Lichtquelle 2 mit ihren Sockeln befestigt. In diesem Ausführungsbeispiel ist eine andere Ausführungsform einer HQI-TS-Lampe als Lichtquelle 2 dargestellt; verwendbar wären aber auch andere Punktlichtquellen.

Weiterhin weisen die Rahmenprofile 11' über die Innenwände 110' nach innen vorstehende Aufnahmeelemente in Form von Führungsnuten 113' auf. Auf der Leuchtenoberseite können in dem einen Paar der einander zugewandten Führungsnuten 113' die Blendelemente 6 in der Leuchtenmitte sowie gegebenenfalls die dritten Reflektoren 5 an den Leuchtenenden geführt sein. Auf der Leuchtenunterseite ist in dem entsprechenden Paar von Führungsnuten 113' eine Abdeckblende anzuordnen, die die Bodenfläche des sich in der Leuchte erstreckenden Lichtkanals bildet. In dem in Figur 7 durch die Leuchtenmitte gelegten Querschnitt ist allerdings als ein weiteres Beispiel für eine Ausgestaltungsmöglichkeit eine transluszente Abdeckscheibe 114' in dieses Paar von Führungsnuten 113' eingelegt. In diesem Ausführungsbeispiel gibt also die Leuchte auch einen durch die Größe und Art der Abdeckscheibe 114' vorgegebenen Teillichtstrom unmittelbar nach unten auf die Nutzebene ab.

Figur 7 zeigt außerdem eine Möglichkeit der Beeinflussung der in den Lichtkanal eingekoppelten Teillichtströme. Schematisch ist eine um die Längsachse der Lichtquelle 2 drehbar angeordnete und um diese Achse z. B. in Form eines Kreisausschnittes gelegte Lochscheibe 8 mit einem Einstellhebel 81 dargestellt, der durch die Oberseite der Leuchte in einem Längsschlitz hindurchgeführt ist. Als Alternative zur Lichtstromlenkung über die stirnseitig angeordneten dritten Reflektoren 5 erlaubt dieses Abblendelement, die Teillichtströme in Längsrichtung der Leuchte unterschiedlich groß einzustellen. Sie gibt damit dem Benutzer je nach der gewählten Position, links- bzw. rechtsseitig von der Lichtquelle 2 stehend, den von einer Seite auf die Nutzebene fallenden Teillichtstrom gegenüber dem von der anderen Seiten eingestrahlten Teillichtstrom zu verstärken, d. h. für Links- bzw. Rechtshänder seitenindividuell einzustellen.

Weitere konstruktive Einzelheiten für die Ausgestaltung einer langgestreckten Leuchte mit einem derartigen flachen gekrümmten Leuchtenquerschnitt sind in Figur 7 nicht dargestellt, da derartige Leuchtenformen, auch in ihren konstruktiven Ausgestaltungen dem Fachmann an sich bekannt sind und deshalb hier keiner weiteren Erläuterung bedürfen.

In den Figuren 8, 9 und 10 sind schließlich Anwendungsfälle der vorstehend beschriebenen Leuchte bei der Beleuchtung von Arbeitsplätzen schematisch dargestellt. In allen Darstellungen ist die Leuchte als Pendelleuchte gezeigt, sie könnte aber ebenso als Standleuchte ausgebildet sein. Figur 8 zeigt eine Vorderansicht eines solchen Arbeitsplatzes mit der über dem Schreibtisch und parallel zu dessen Längsachse aufgehängten Leuchte, die als Direkt/Indirekt-Leuchte mit variierbarem Freiausstrahlungswinkel α1 bzw. α2 einen Teillichtstrom nach oben gegen die Decke gerichtet ausstrahlt und das restliche, an den Leuchtenenden austretende Licht gerichtet aufgrund einer Reflexion an den dritten Reflektoren 5 über Kreuz auf die Nutzebene, hier die Schreibtischplatte lenkt. Die jeweilige Hauptstrahlrichtung dieser Lichtbündel ist durch Pfeile 9 gekennzeichnet. Diese Art der Lichtlenkung von beiden Seiten auf die Nutzebene eliminiert die Gefahr einer Reflexblendung des am Schreibtisch Sitzenden. In den Figuren 9 und 10 sind schließlich in Seitenansicht ein Einzelarbeitsplatz bzw. ein Doppelarbeitsplatz mit einander gegenüber sitzenden Personen dargestellt. Diese beiden Beispiele sollen die gewünschte Lichtverteilungskurve in der C0-C180°-Ebene illustrieren. Bevorzugt ist eine keulenförmige Lichtverteilung mit geringen Intensitätsunterschieden über der eigentlichen Arbeitsfläche. Diese Lichtverteilung bedeutet einerseits eine optimale Nutzung des auf die Nutzebene gerichteten Lichtstromes und andererseits entspricht sie den Anforderungen an einen modernen Büroarbeitsplatz unter Ausschaltung möglicher Direktblendung.

## Patentansprüche

1. Langgestreckte Innenleuchte mit einem Leuchtengehäuse (1), in dem mittig sowie zur Leuchtenlängsachse senkrecht und quer eine Lichtquelle (2) mit kurzem Brennfleck angeordnet ist, zu deren beiden Seiten sich jeweils in Richtung der Leuchtenlängsachse erstreckende erste Reflektoren (3) zum Einkoppeln von der Lichtquelle (2) ausgestrahlten Lichtes in zwei, durch einen hohlen Querschnitt des Leuchtengehäuses (1) gebildete, sich in Leuchtenlängsachse erstreckende Lichtkanalhälften angeordnet sind und an dessen der Lichtquelle (2) abgewandten Leuchtenstirnseiten weitere Reflektoren (5) mit gekrümmter Oberfläche als Lichtleitelemente vorgesehen sind, die das sich im Lichtkanal des Leuchtengehäuses (1) ausbreitende Licht in gebündelten Teillichtströmen von beiden Seiten her auf eine unterhalb der Leuchte liegende Nutzebene lenken.

2. Leuchte nach Anspruch 1, **dadurch gekennzeichnet,** daß die ersten Reflektoren (3) als spiegelbildlich symmetrisch zu einer die Leuchtenlängsachse enthaltenden vertikalen Leuchtensymmetrieebene angeordnete Kegelschnittflächen, die sich spiegelbildlich beiderseits der Lichtquelle (2) in Richtung der Leuchtenlängsachse öffnen und ebenso wie die weiteren den Lichtkanal bildenden Innenflächen des Leuchtengehäuses (1) hochreflektierend ausgebildet sind.

3. Leuchte nach Anspruch 2, **dadurch gekennzeichnet,** daß die ersten Reflektoren (3) als Parabeln beziehungsweise Paraboloide ausgebildet sind, deren Brennpunkt mit dem Brennfleck der Lichtquelle (2) zusammenfällt.

4. Leuchte nach einem der Ansprüche 2 bzw. 3, **dadurch gekennzeichnet,** daß im Innern des Leuchtengehäuses (1) unterhalb der Lichtquelle (2) weitere Reflektoren (4) vorgesehen sind, die sich achsenparallel zur Längsachse der Lichtquelle schneiden, zu deren beiden Seiten erstrecken und sich mit je einer Kegelschnittfläche an die Bodenfläche (12) des Leuchtengehäuses (1) tangential anschmiegen.

5. Leuchte nach einem der Ansprüche 1 bis 4 , **dadurch gekennzeichnet,** daß der Lichtquelle (2) benachbart und um deren Achse drehbar angeordnet ein weiteres Reflektorelement (8) vorgesehen ist, und damit wahlweise die beiden in den Lichtkanal eingekoppelten Teillichtströme unterschiedlich groß einstellbar sind.

6. Leuchte nach Anspruch 5, **dadurch gekennzeichnet,** daß das weitere Reflektorelement (8) als Lichtscheibe ausgebildet ist.

7. Leuchte nach einem der Ansprüche 1 bis 6, **dadurch gekennzeichnet,** daß in der von der zu beleuchtenden Nutzebene abgewandten Deckfläche (13) des Leuchtengehäuses (1) im Bereich der Lichtquelle (2) eine Öffnung für das unmittelbare Austreten eines Teillichtstromes als Indirektanteil vorgesehen ist.

8. Leuchte nach Anspruch 7, **dadurch gekennzeichnet,** daß mindestens ein relativ zu der Deckfläche (13) des Leuchtengehäuses (1) in Richtung der Leuchtenlängsachse verschiebbar angeordnetes Blendelement (6) vorgesehen ist, durch dessen Position gegenüber der Deckfläche (13) die Größe der Lichtaustrittsöffnung und damit ein variabler Freiausstrahlungswinkel(α1, α2)für den indirekten Teillichtstrom festlegbar ist.

9. Leuchte nach Anspruch 8, **dadurch gekennzeichnet,** daß ein Paar von zueinander entgegengesetzt in Richtung der Leuchtenlängsachse verschiebbaren Blendelementen (6) vorgesehen ist, deren lichtquellennaher Randbereich jeweils mit einer nichtlinearen Randkante (61) und/oder für auftreffendes Licht teildurchlässig ausgebildet ist und daß je ein weiterer Reflektor (7), der Deckfläche (13) des Leuchtengehäuses (1) zugekehrt und sich quer zur Leuchtenlängsachse in Richtung der Lampenachse der Lichtquelle (2) erstreckend, zwischen einem der beiden Enden der Lichtquelle (2) und der zugeordneten Seitenwand (11) des Leuchtengehäuses (1) vorgesehen ist.

10. Leuchte nach einem der Ansprüche 1 bis 9, **dadurch gekennzeichnet,** daß die an den Stirnseiten des Leuchtengehäuses (1) vorgesehenen weiteren Reflektoren (5) an dem Leuchtengehäuse um eine zur Stirnseite parallele und/oder senkrechte Achse Schwenkbar angeordnet sind.

11. Leuchte nach einem der Ansprüche 1 bis 10, **dadurch gekennzeichnet,** daß die an den Stirnseiten des Leuchtengehäuses (1) vorgesehenen weiteren Reflektoren (5) an dem Leuchtengehäuse (1) in Richtung der Leuchtenlängsachse längsverschiebbar angeordnet sind.

## Claims

1. Elongated indoor lighting fixture having a lighting fixture housing (1) in which a light source (2) having a short focus spot is arranged centrally and at right angles and transversely with respect to the lighting fixture longitudinal axis, on both sides of which first reflectors (3), which in each case extend in the direction of the lighting fixture longitudinal axis, are arranged for coupling light, which is emitted from the light source (2), into two light channel halves which are formed by a hollow cross-section in the lighting fixture housing (1) and extend on the lighting fixture longitudinal axis, and on whose lighting fixture ends facing away from the light source (2) further reflectors (5) having a curved surface are provided as light conducting elements which guide the light which propagates in the light channel of the lighting fixture housing (1) in focused light flux elements from both sides onto a working plane which is located underneath the lighting fixture.

2. Lighting fixture according to Claim 1, characterized in that the first reflectors (3) are designed as conical section surfaces which are arranged symmetrically in mirror-image form with respect to a vertical lighting fixture plane of symmetry containing the lighting fixture longitudinal axis, open in mirror-image form on both sides of the light source (2) in the direction of the lighting fixture longitudinal axis, and are designed to be highly reflective in the same way as the other inner surfaces of the lighting fixture housing (1) which form the light channel.

3. Lighting fixture according to Claim 2, characterized in that the first reflectors (3) are designed as parabolas or paraboloids whose focus point coincides with the focus spot of the light source (2).

4. Lighting fixture according to one of Claims 2 or 3, characterized in that further reflectors (4) are provided in the interior of the lighting fixture housing (1) underneath the light source (2) and intersect parallel to the longitudinal axis of the light source, extend on both of its sides and, with in each case one conical section surface, abut tangentially against the base surface (12) of the lighting fixture housing (1).

5. Lighting fixture according to one of Claims 1 to 4, characterized in that a further reflector element (8) is provided adjacent to the light source (2) and arranged such that it can rotate about the axis of the latter, and in order that the two light flux elements which are coupled into the light channel can optionally be set to different magnitudes.

6. Lighting fixture according to Claim 5, characterized in that the further reflector element (8) is designed as a light disc.

7. Lighting fixture according to one of Claims 1 to 6, characterized in that an opening for a light flux element to emerge from directly is provided as an indirect element in the region of the light source (2) in the covering surface (13) of the lighting fixture housing (1) facing away from the working plane to be illuminated.

8. Lighting fixture according to Claim 7, characterized in that at least one shutter element (6) is provided, which is arranged such that it can be moved relative to the covering surface (13) of the lighting fixture housing (1) in the direction of the lighting fixture longitudinal axis and whose position with respect to the covering surface (13) makes it possible to fix the size of the light outlet opening and thus makes possible a variable free emission angle (α1, α2) for the indirect light flux element.

9. Lighting fixture according to Claim 8, characterized in that a pair of shutter elements (6) are provided which can be moved in opposite directions to one another in the direction of the lighting fixture longitudinal axis and whose rim region close to the light source is in each case designed with a non-linear rim edge (61) and/or to be partially translucent for incident light, and in that in each case one further reflector (7), facing away from the covering surface (13) of the lighting fixture housing (1) and extending transversely with respect to the lighting fixture longitudinal axis in the direction of the lamp axis of the light source (2), is provided between one of the two ends of the light source (2) and the associated side wall (11) of the lighting fixture housing (1).

10. Lighting fixture according to one of Claims 1 to 9, characterized in that the further reflectors (5) which are provided at the ends of the lighting fixture housing (1) are arranged on the lighting fixture housing such that they can pivot about an axis which is parallel to and/or at right angles to the end.

11. Lighting fixture according to one of Claims 1 to 10, characterized in that the further reflectors (5) which are provided at the ends of the lighting fixture housing (1) are arranged on the lighting fixture housing (1) such that they can be moved longitudinally in the direction of the lighting fixture longitudinal axis.

## Revendications

1. Luminaire d'intérieur allongé avec un corps de luminaire (1), dans lequel est disposé au centre ainsi que verticalement et perpendiculairement à l'axe longitudinal du luminaire une source lumineuse (2) à foyer court, de part et d'autre de laquelle sont disposés des premiers réflecteurs (3) s'étendant chacun selon l'axe longitudinal du luminaire, qui sont destinés à envoyer la lumière émise par la source lumineuse (2) dans deux moitiés de canal lumineux formées par une section creuse du corps de luminaire (1) et s'étendant selon l'axe longitudinal du luminaire, et qui présente sur ses faces détournées de la source lumineuse (2) d'autres réflecteurs (5) à surface courbée servant à conduire la lumière, qui dirigent la lumière se propageant dans le canal lumineux du corps de luminaire (1) en flux lumineux partiels concentrés depuis les deux côtés sur un plan de travail situé au-dessous du luminaire.

2. Luminaire selon la revendication 1, caractérisé en ce que les premiers réflecteurs (3) se présentent sous forme de surfaces coniques disposées symétriquement par rapport à un plan de symétrie vertical du luminaire contenant l'axe longitudinal du luminaire, qui s'ouvrent symétriquement de part et d'autre de la source lumineuse (2) dans le sens de l'axe longitudinal du luminaire et sont fortement réfléchissants, comme les autres surfaces intérieures du corps de luminaire (1) formant le canal lumineux.

3. Luminaire selon la revendication 2, caractérisé en ce que les premiers réflecteurs (3) sont réalisés sous forme de paraboles resp. sous forme de paraboliques, dont le foyer coïncide avec le foyer de la source lumineuse (2).

4. Luminaire selon l'une des revendications 2 resp. 3, caractérisé en ce que d'autres réflecteurs (4) sont prévus à l'intérieur du corps de luminaire (1), au-dessous de la source lumineuse (2), qui se croisent paraxialement par rapport à l'axe longitudinal de la source lumineuse, s'étendent de part et d'autre de celle-ci et épousent tangentiellement avec respectivement une section conique la forme du fond (12) du corps de luminaire (1).

5. Luminaire selon l'une quelconque des revendications 1 à 4, caractérisé en ce qu'un autre élément réfléchissant (8) contigu à la source lumineuse (2) et logé de manière mobile autour de l'axe longitudinal de celle-ci est prévu et en ce que l'intensité des deux flux lumineux partiels envoyés dans le canal lumineux peut ainsi être réglée individuellement, selon le choix.

6. Luminaire selon la revendication 5, caractérisé en ce que l'autre élément réfléchissant (8) est réalisé sous forme de disque optique.

7. Luminaire selon l'une quelconque des revendications 1 à 6, caractérisé en ce qu'une ouverture destinée à la sortie directe d'un flux lumineux partiel comme part d'éclairage indirect est prévue dans la surface de recouvrement (13) détournée du plan de travail à éclairer du corps de luminaire (1) dans la zone de la source lumineuse (2).

8. Luminaire selon la revendication 7, caractérisé en ce qu'au moins un élément obturateur (6) disposé de manière déplaçable par rapport à la surface de recouvrement (13) du corps de luminaire (1) dans le sens de l'axe longitudinal du luminaire est prévu, dont la position par rapport à la surface de recouvrement (13) permet de définir la taille de l'ouverture de sortie de lumière et ainsi un angle d'émission libre (α1, α2) variable pour le flux lumineux partiel indirect.

9. Luminaire selon la revendication 8, caractérisé en ce qu'une paire d'éléments obturateurs (6) déplaçables en sens inverse dans la direction de l'axe longitudinal du luminaire est prévue, dont la partie extérieure proche de la source lumineuse est réalisée à chaque fois avec un bord extérieur (61) non linéaire et/ou semi-perméable pour la lumière incidente et en ce que respectivement un autre réflecteur (7) tourné vers la surface de recouvrement (13) du corps de luminaire (1) et étendu perpendiculairement à l'axe longitudinal du luminaire dans le sens de l'axe de lampe de la source lumineuse (2) est prévu entre l'une des deux extrémités de la source lumineuse (2) et la paroi latérale (11) affectée du corps de luminaire (1).

10. Luminaire selon l'une quelconque des revendications 1 à 9, caractérisé en ce que les autres réflecteurs (5) prévus aux faces du corps de luminaire (1) sont disposés sur le corps de luminaire de manière à pouvoir pivoter autour d'un axe parallèle et/ou vertical à la face.

11. Luminaire selon l'une quelconque des revendications 1 à 10, caractérisé en ce que les autres réflecteurs (5) prévus aux faces du corps de luminaire (1) sont disposés sur le corps de luminaire de manière à pouvoir être déplacés longitudinalement dans le sens de l'axe longitudinal du luminaire.
